# EUROPEAN PATENT APPLICATION

(11) **EP 4 635 772 A1**
(43) Date of publication of application: **22.10.2025**
(21) Application number: 24170423.8
(22) Date of filing: 16.04.2024
(51) Int. Cl.: B60K 35/10, B60K 35/20

(54) **METHOD TO BE EXECUTED BY USER EQUIPMENT, APPARATUS AND COMPUTER PROGRAM**

(71) Applicant: Bayerische Motoren Werke Aktiengesellschaft, 80809 München (DE)
(72) Inventor: Zaki, Tarek, 80805 München (DE); Droste, Matthias, 85748 Garching (DE)

(57) **Abstract**

Embodiments relate to a method to be executed by user equipment. The method comprises capturing image data indicating an image of a structure displayed on a display device and determining, based on the image data, perspective data indicating a perspective of the structure. Further, the method comprises determining, based on the perspective data, position data indicating a position of a user of the user equipment relative to the display device and adjusting, based on the position data, a functionality of a software running on the user equipment.

## Description

The present disclosure relates to the field of customization of functionalities. Embodiments relate to a method to be executed by user equipment, an apparatus and a computer program.

Customization of functions, e.g., inside a vehicle, may be important to improve a user experience. For example, passengers seated in the back of a vehicle may want to access different functionalities of the vehicle than passengers seated in the front. Passengers seated in the back may want to adjust a window blind, for example. Thus, there may be a need to improve an adjustment of a function.

It is therefore a finding that a functionality of a software running on user equipment can be adjusted based on a position of a user of the user equipment relative to a display device. The position of the user relative to the display device may allow to adjust the software, such that a functionality related to the position of the user can be activated and/or a functionality non-related to the position of the user can be deactivated.

Examples provide a method to be executed by user equipment. The method comprises capturing image data indicating an image of a structure displayed on a display device and determining, based on the image data, perspective data indicating a perspective of the structure. Further, the method comprises determining, based on the perspective data, position data indicating a position of a user of the user equipment relative to the display device and adjusting, based on the position data, a functionality of a software running on the user equipment. Adjusting the functionality of the software running on the user equipment may allow to customize the functions provided by the software. In this way, the user can be given a choice of functions that the user can control. The customization of the functions, i.e., the adjustment of the functionality of the software is based on the position of the user relative to the display device. Using the structure displayed on a display device may allow to determine the position of the user relative to the display device in a facilitated way.

In an example, the position data may indicate a predefined position of the user of the user equipment relative to the display device. That is, the functionality of the software may be linked to a predefined position of the user relative to the display device. For example, users at different positions relative to the display device may have different functions they can use. Using the predefined position the determination of the functions that the user can control can be improved.

In an example, the predefined position may be a seat occupied by the user of the user equipment within a vehicle and the adjustment of the functionality of the software may be based on the seat occupied by the user within the vehicle. In this way, the user can be given a choice of functions that the user can control for the current position in the vehicle. For example, different seats of the vehicle may offer different functionalities, e.g., climate control for the back seats instead of climate control for the front seats. In this way, the adjustment of the functionality of the software can allow the customization of a function of the vehicle offered to the user.

In an example, the method may further comprise obtaining vehicle data indicating a vehicle in which the user equipment is located and determining the position data based on the vehicle data. Using the vehicle data may allow to determine the seat occupied by the user with an improved reliability. For example, the vehicle data may indicate a seat configuration and display configuration of the vehicle. Thus, obtaining the vehicle data may allow to determine a possible seat occupied by the user based on the seat configuration and display configuration of the vehicle. In this way, the determination of the position of the user relative to the display device can be improved.

In an example, the vehicle data is obtained by applying image processing on the image data. Applying image processing may allow to determine the vehicle data in a facilitated way. For example, information about the seat configuration and/or display configuration may be encrypted in the structure displayed on the display device. That is, the vehicle data can be obtained by post processing the captured image data.

In an example, the method may further comprise obtaining setting data of an optical imaging sensor of the user equipment used to capture the image data. The setting data indicates zoom information of the optical imaging sensor. Further, the position data may be determined based on the setting data. The setting data may allow to determine a distance between the user equipment and the display device. Based on the distance the position of the user can be determined with improved reliability. For example, the distance can be used to distinguish whether the user occupies a front seat or back seat or a seat in a first row in the back or in a seat in a second row in the back.

In an example, the software running on the user equipment is for adjusting a setting of a device of the vehicle. That is, the software can be used by the user to adjust a setting of the device of the vehicle. For example, the software, e.g., a graphical user interface of the software, can be used to present the user a choice of functions that the user can control.

In an example, the method may further comprise displaying the software with the adjusted functionality, receiving a user input and generating, based on the user input, control data indicating an adjustment of a setting of a device of a vehicle. Further, the method may comprise transmitting the control data for adjusting the setting of the device of the vehicle. In this way, the user can use the user equipment to adjust a function of the device of the vehicle based on the adjusted functionality of the software. For example, a specific function may be activated for the user based on the position of the user relative to the display device.

Examples relate to an apparatus, comprising interface circuitry configured to communicate with at least one of a communication device, user equipment or backend and processing circuitry configured to perform a method as described above.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method to be executed by user equipment;
Figs. 2a and 2b show an exemplary inside of a vehicle comprising a display device for the back seats;
Figs. 3a and 3b show different examples of QR codes displayed on a display device of user equipment; and
Fig. 4 shows a block diagram of an example of an apparatus.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

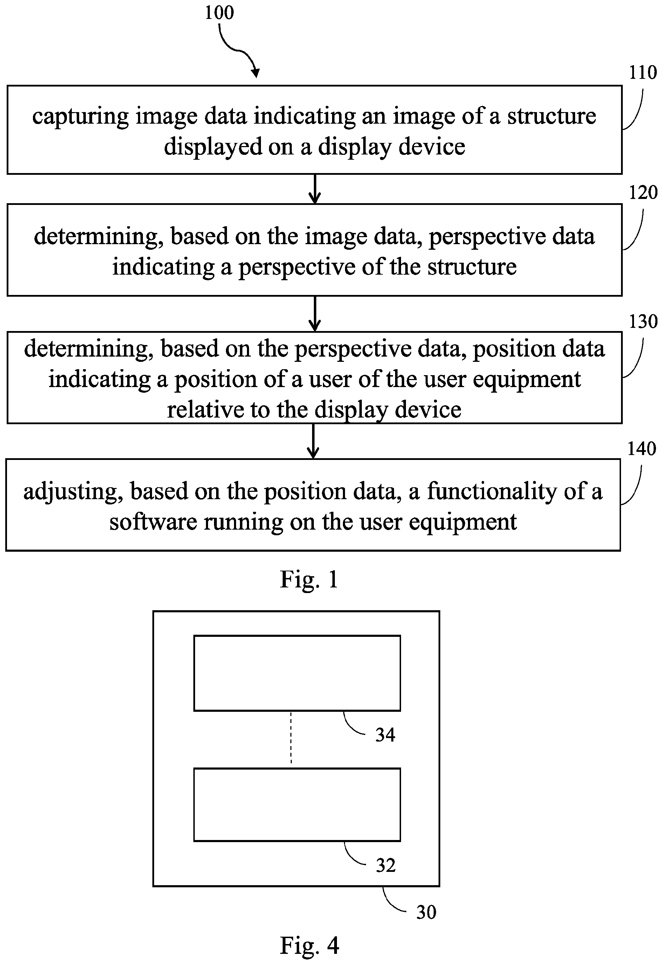

Fig. 1 shows an example of a method 100 to be executed by user equipment. The method 100 comprises capturing 110 image data indicating an image of a structure displayed on a display device. The image data may be captured using an optical imaging sensor of the user equipment. For example, a front camera or back camera may be used to capture the image data. The structure may be any kind of displayed information suitable to (simply) encode information into a format that can be easily scanned and read by devices with scanning capabilities. For example, the structure may be a QR code, a barcode or a snap tag.

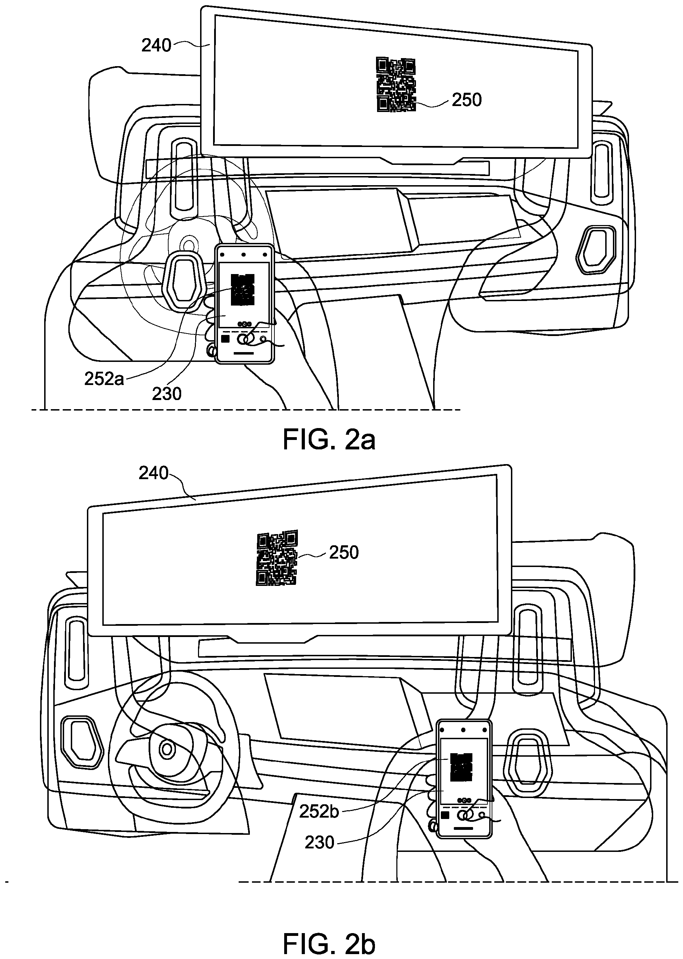

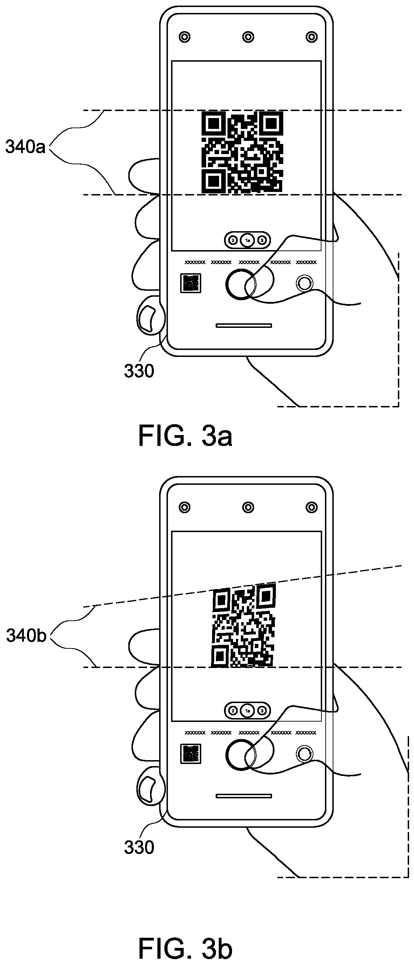

Further, the method 100 comprises determining 120 perspective data indicating a perspective of the structure. The perspective data is determined based on the image data. For example, the user of the user equipment may be seated on the right side of the display device. This means that the structure captured with the user equipment can be deformed due to the perspective of the user equipment (see Figs. 2 and 3). That is, a size of the structure may depend on the position of user equipment relative to the display device. For example, the user equipment can determine the perspective data based on the size or the outer dimension of the structure. Optionally or alternatively, the user equipment can determine the perspective data by comparing with a reference structure. For example, the user equipment may determine the perspective data by determining a deviation between the reference structure and the captured structure.

Further, the method 100 comprises determining 130 position data indicating a position of a user of the user equipment relative to the display device. The position data is determined based on the perspective data. Determining 130 the position data may comprise determining a distance and/or an angle dependent position of the user relative to the display device. That is, the user equipment may determine a distance and/or a viewing angle of the user equipment to the display device. Optionally or alternatively, the user equipment may determine 130 the position data by determining a predefined position occupied by the user of the user equipment. For example, the user equipment may compare the outer dimension of the captured structure with reference structures to determine the predefined position. In this case, the user equipment may retrieve different reference structures from a storage device for comparison with the captured structure. In this way, the position data can be determined with less computational effort.

Further, the method 100 comprises adjusting 140 a functionality of a software running on the user equipment. The functionality of the software is adjusted based on the position data. In this way, the software running on the user equipment can be customized to a current position of the user. For example, the software may provide different functions depending on the position of the user relative to the display device. The adjustment of the software may allow to provide a user choice of functions that the user can control. That is, the adjustment of the software may be used to customize functions of devices in the surrounding of the user. In this way, a user experience can be improved.

The method 100 may allow to provide a user an adjusted software for specific user needs. For example, the method 100 may comprise image processing on the captured image data while the user is scanning the structure displayed on the display device. That is, the image data may be captured during scanning of the structure using the user equipment. For example, the user of the user equipment may scan the structure displayed on the display device for pairing the user equipment with another electronic device, e.g., part of the display device. Based on the image processing and location of the user relative to the display device, e.g., a location, at which the user is seated in the vehicle, can be determined. Therefore, the functionality of the software, e.g., features of an application installed on the user equipment, can be adjusted for a specific user need and/or a possibility of the user to adjust the setting of the device in the surrounding.

For example, the structure may be a QR code. The user can scan the QR code using the user equipment. The image of the QR code may be processed by image processing when the user is scanning a QR code not only to identify the QR code itself, but also to identify the orientation of the QR code with respect to the user equipment. Accordingly, a specific location e.g., a specific seat location inside of the vehicle, can be assigned to the user equipment. The assigned specific location can be used to adjust the features offered within an application, e.g., an application of a vehicle manufacturer, installed on the user equipment accordingly.

In an example, the position data may indicate a predefined position of the user of the user equipment relative to the display device. That is, the user equipment may determine the position data by determining the predefined position that the user most likely occupies. Multiple predefined positions may be related to the display device the structure is displayed on. For example, one display device may be related to back seats of a vehicle. The back seats may comprise a left seat, a middle seat and a right seat. Thus, there may be three predefined positions associated with the display device. Therefore, the position data may indicate one of these three predefined positions. Using the predefined position may allow to increase a reliability of the determination of the position of the user and/or to reduce a computational load to determine the position data. Even though the description mainly focuses on user equipment used in conjunction with the vehicle, the user equipment can be used in conjunction with any kind of display device such as a television or a monitor of a computer. That is, the method can be applied to the display device of the vehicle, a television and/or a monitor of a computer, for example.

In an example, the predefined position may be a seat occupied by the user of the user equipment within a vehicle and the adjustment of the functionality of the software may be based on the seat occupied by the user within the vehicle. For example, the back seats of the vehicle may offer different functionalities to control different functions or devices of the vehicle. Window seats of the back seats may provide control of a window blind, for example. Thus, the functionality of the software can be adjusted such that the window blind can only be controlled from a passenger occupying a window seat. In this way, a user of the vehicle can be given a choice of functions that the user can control for the current occupied seat in the vehicle.

In an example, the method 100 may further comprise obtaining vehicle data indicating a vehicle in which the user equipment is located and determining the position data based on the vehicle data. The vehicle data may indicate a vehicle type or specific vehicle identifier, for example. The vehicle data may be obtained by receiving the vehicle data, e.g., from an electronic control unit of the vehicle. Optionally or alternatively, the vehicle data may be obtained by determining based on the captured image data, e.g., by applying image processing. The vehicle data can be used to determine the position data. For example, the vehicle data may indicate all seats of the vehicle with respect to the display devices of the vehicle. The vehicle data may indicate the vehicle type and the user equipment can retrieve information about the seats of the vehicle type from a storage device. In this way, information about the predefined positions can be determined in a facilitated way.

In an example, the vehicle data is obtained by applying image processing on the image data. For example, the structure, such like a QR code, may comprise information about the vehicle in which the display device is located. In this way, the vehicle data can be determined based on the captured image data. Thus, obtaining the image data can be facilitated.

In an example, the method 100 may further comprise obtaining setting data of an optical imaging sensor of the user equipment used to capture the image data. The setting data indicates zoom information of the optical imaging sensor. Further, the position data may be determined based on the setting data. The setting data may allow to determine a distance between the user equipment and the display device. For example, the display device may be associated with multiple seats at different distances from the display device. In this case, the user equipment can distinguish the position of the user not only from the size or the outer dimension of the structure displayed on the display device, but also from the setting data, e.g., a respective zoom meta-information, of the optical imaging sensor of the user equipment. For example, the size of the structure shown in the captured image may be correlated with the zoom of the optical imaging sensor on the application used to capture the image. In this way, a distance of the user equipment from the display device can be determined. Based on the distance the position of the user can be determined with an improved reliability.

In an example, the software running on the user equipment is for adjusting a setting of a device of the vehicle. That is, the software can be used by the user to adjust a setting of the device of the vehicle. For example, the software, e.g., a graphical user interface of the software, can be used to present the user a choice of functions that the user can control. Adjusting the functionality of the software may comprise activating and/or deactivating certain icons in the software. Thus, the graphical user interface of the software can be adjusted to provide the user an overview of functions that the user can control.

In an example, the method 100 may further comprise displaying the software with the adjusted functionality, receiving a user input and generating, based on the user input, control data indicating an adjustment of a setting of a device of a vehicle. Further, the method 100 may comprise transmitting the control data for adjusting the setting of the device of the vehicle. In this way, the user can use the user equipment to adjust a function of the device of the vehicle based on the adjusted functionality of the software. For example, a specific function may be activated for the user based on the position of the user relative to the display device.

In an example, the image of the structure displayed on the display device may indicate a position of the display device. That is, the image of the structure may be assigned to a specific seat of the vehicle. For example, the image of the structure may be assigned to a passenger seat in the front.

Further, the method 100 may comprise determining a functionality of the display device based on the position of the display device. For example, the display device can only be used by a user seated on the passenger seat or multiple user of the vehicle excluding the driver. That is, a usage of the display device by another unintended user, e.g., a driver, can be blocked. For example, the driver may scan the structure displayed on the display device from his perspective. In this case, the perspective data would indicate a perspective of the driver. Therefore, the method 100 may adjust 140 the functionality of a software running on the user equipment by blocking an interaction with the display device based on the position of a user of the user equipment relative to the display device. In this way, a use of the display device by the driver can be prevented. The access to the display device could also be blocked for other user in the car, for example, passengers seated in the back of the vehicle. In this way, the display device can be only accessed by an intended user. That is, the functionality of the display device can be determined based on the position of the display device and/or the position of a user of the user equipment relative to the display device.

In general, user equipment may be a device that is capable of communicating wirelessly. In particular, however, the user equipment may be a mobile user equipment, e.g., user equipment that is suitable for being carried around by a user. For example, the user equipment may be a user terminal or user equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 (comprising Figs. 2a and 2b) - 4).

Figs. 2a and 2b show an exemplary inside of a vehicle comprising a display device 240 for the back seats. Fig. 2a shows user equipment 230 located on the left side. The user of the user equipment 230 is scanning the structure 250. In this case a structure 250 is a QR code 250. The user occupies the left back seat. As can be seen in the image displayed on the screen of the user equipment 230, the QR code 252a is deformed due to the perspective of the user equipment to the display device. That is, the outer dimension of the QR code is not rectangular.

Fig. 2b shows user equipment 230 located on the right side. The user of the user equipment 230 is scanning the QR code 250. The user occupies the right back seat. As can be seen in the image displayed on the screen of the user equipment 230, the QR code 252b is deformed in a different way than the QR code 252a. That is, the perspective of the user equipment 230 to the display device 250 can be determined based on the size and/or the outer dimension of the QR code 252a, 252b.

Fig. 2 discloses just an example where the QR code 250 is illustrated on the back seats display device 240. The concept is equally valid for any kind of display device such as a front display device.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 (comprising Figs. 3a and 3b) - 4).

Figs. 3a and 3b show different examples of QR codes displayed on a display device of user equipment 330. Figs. 3a shows an example in which the QR code is not deformed. That is, the outer dimension of the QR code may have a rectangular shape. In this case the guiding lines 340a which can be used to highlight the perspective of the user equipment are parallel. This is the case when the user equipment 330 is directly in front of the center of the display device and not displaced to the side.

In comparison Figs. 3b shows an example in which the QR code is deformed, e.g., the user equipment 330 is displayed to the right side of the display device. In this case the guiding lines 340b are not parallel. Based on the angle between the guiding lines 340 the perspective of user equipment 330 to the display device can be determined.

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1-2) and/or below (e.g., Fig. 4).

Fig. 4 shows a block diagram of an example of an apparatus 30, e.g., of user equipment. The apparatus 30 comprises interface circuitry 32 configured to communicate another electronic device and processing circuitry 34 configured to perform a method as described above, e.g., the method to be executed by the user equipment as described with reference to Fig. 1. For example, the apparatus 30 may be part of user equipment.

As shown in Fig. 4 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 4 may comprise one or more optional additional features corresponding to one or more aspects mentioned in connection with the proposed concept or one or more examples described above (e.g., Fig. 1 - 3).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
100 method
110 capturing image data
120 determining perspective data
130 determining position data
140 adjusting a functionality
230 user equipment
240 display device
250 structure displayed on the display device
252a, 252b scanned structure displayed on the user equipment
330 user equipment
340a, 340b guiding lines

## Claims

1. A method (100) to be executed by user equipment, comprising:
capturing (110) image data indicating an image of a structure displayed on a display device;
determining (120), based on the image data, perspective data indicating a perspective of the structure;
determining (130), based on the perspective data, position data indicating a position of a user of the user equipment relative to the display device; and
adjusting (140), based on the position data, a functionality of a software running on the user equipment.

2. The method according to claim 1, wherein
the position data indicates a predefined position of the user of the user equipment relative to the display device.

3. The method according to claim 2, wherein
the predefined position is a seat occupied by the user of the user equipment within a vehicle, and
the adjustment of the functionality of the software is based on the seat occupied by the user within the vehicle.

4. The method according to any one of the preceding claims, further comprising:
obtaining vehicle data indicating a vehicle in which the user equipment is located; and
determining the position data based on the vehicle data.

5. The method according to claim 4, wherein
the vehicle data is obtained by applying image processing on the image data.

6. The method according to any one of the preceding claims, further comprising
obtaining setting data of an optical imaging sensor of the user equipment used to capture the image data, the setting data indicating zoom information of the optical imaging sensor, and
wherein
the position data is determined based on setting data.

7. The method according to any one of the preceding claims, wherein
the image data indicates a position of the display device;
determine, based on the image data, a position of the display device;
determining a functionality of the display device based on the position of the display device; and
adjusting the functionality based on the position of the display device and the position of a user of the user equipment relative to the display device.

8. The method according to any one of the preceding claims, further comprising:
displaying the software with the adjusted functionality;
receiving a user input;
generating, based on the user input, control data indicating an adjustment of a setting of a device of a vehicle; and
transmitting the control data for adjusting the setting of the device of the vehicle.

9. An apparatus (30), comprising:
interface circuitry (32); and
processing circuitry (34) configured to perform a method according to any of the preceding claims.

10. A computer program having a program code for performing the method (100) according to claim 1-8, when the computer program is executed on a computer, a processor, or a programmable hardware component.
